# EUROPEAN PATENT APPLICATION

(11) **EP 4 840 705 A1**
(43) Date of publication of application: **18.11.2026**
(21) Application number: 26162722.8
(22) Date of filing: 05.03.2026
(51) Int. Cl.: B60R 25/24, B60R 25/23, B63H 21/21

(54) **BOAT PROPULSION MACHINE CONTROL SYSTEM**

(30) Priority: 14.05.2025 JP 2025081114
(71) Applicant: Suzuki Motor Corporation, Hamamatsu-shi, Shizuoka 432-8611 (JP)
(72) Inventor: TAKEWAKI, Hiromichi, Shizuoka, 432-8611 (JP); ARAKI, Kentaro, Shizuoka, 432-8611 (JP)
(74) Representative: Haseltine Lake Kempner LLP

(57) **Abstract**

A boat propulsion machine control system includes an operating device including a plurality of operating elements for operating a boat propulsion machine, a control device configured to control the boat propulsion machine, based on an operation of each of the operating elements, a locking device configured to lock and unlock the boat propulsion machine, and a terminal device configured to wirelessly communicate with the locking device.

## Description

### TECHNICAL FIELD

The present disclosure relates to a boat propulsion machine control system that controls a boat propulsion machine, and more particularly to a boat propulsion machine control system that can lock and unlock a boat propulsion machine.

### BACKGROUND ART

There is known a technology for restricting operation of a device, vehicle, or the like by locking the device, vehicle, or the like, and unlocking the device, vehicle, or the like in response to an input of an unlock instruction. Furthermore, in this technology, a terminal device such as a mobile phone is known as a device for inputting an unlock instruction.

JPH10-317753A describes a keyless entry system that can unlock a door of a vehicle using a mobile phone. In this keyless entry system, the vehicle is equipped with a lock/unlock control device that controls locking and unlocking of the door. When a user operates the mobile phone to unlock the door, an instruction signal is transmitted from the mobile phone to the lock/unlock control device. The lock/unlock control device unlocks the door based on the instruction signal.

### SUMMARY OF INVENTION

Meanwhile, it is considered developing a boat propulsion machine control system that controls a boat propulsion machine and is equipped with a locking device that restricts operation of the boat propulsion machine by locking the boat propulsion machine, and unlocks the boat propulsion machine in response to an input of an unlock instruction.

Furthermore, in this boat propulsion machine control system, use of a terminal device such as a smartphone as a device for inputting an unlock instruction is being considered. Specifically, in this boat propulsion machine control system, it is desired to adopt a configuration in which the locking device has an ability to communicate wirelessly with the terminal device, and when a user operates the terminal device to unlock the boat propulsion machine, the terminal device transmits an instruction signal to the locking device, and the locking device unlocks the boat propulsion machine based on that instruction signal.

Furthermore, the terminal device such as a smartphone is a general-purpose device that a user uses for a wide variety of purposes, such as making a phone call, transmitting and receiving an e-mail, and playing music and videos. Therefore, some users may not want to always use the terminal device as a device for inputting an unlock instruction to the locking device to unlock the boat propulsion machine. For example, taking this into consideration, it is desired to provide the above-described locking device with a connection switching control unit that controls switching whether to place the locking device into a state where the locking device can be wirelessly connected to a terminal device, and a connection switching instruction input unit that is a user interface that allows the user to input an instruction to the connection switching control unit as to whether to place the locking device into a state where the locking device can be wirelessly connected to the terminal device. By providing the locking device with the connection switching control unit and the connection switching instruction input unit, the user can switch whether to put the locking device into a state where the locking device can be wirelessly connected to the terminal device, thereby allowing the user to freely choose whether to use the terminal device as a device for inputting an unlock instruction to the locking device.

To describe this in more detail using an example, when Bluetooth (registered trademark) Low Energy (BLE) is adopted as a wireless communication method between the locking device and the terminal device, the connection switching control unit controls on/off switching of a BLE wireless communication function of the locking device, and the connection switching instruction input unit is a user interface that enables a user to input an instruction to the connection switching control unit to switch on/off the BLE wireless communication function of the locking device. When the locking device and the terminal device are paired (bonded) in advance, when the BLE wireless communication function of the locking device is on and the BLE wireless communication function of the terminal device is on, the locking device and the terminal device are automatically wirelessly connected when the terminal device approaches the locking device. On the other hand, when the BLE wireless communication function of the locking device is turned off, even when the terminal device approaches the locking device, the locking device and the terminal device are not wirelessly connected. By switching the BLE wireless communication function of the locking device on or off, the user can switch whether the locking device and the terminal device are automatically wirelessly connected when the terminal device approaches the locking device, and thus can freely select whether to use the terminal device as a device for inputting an unlock instruction to the locking device.

However, the above-described boat propulsion machine control system has the following problems. When the connection switching instruction input unit becomes unusable due to, for example, a malfunction, the user will be unable to input an instruction to the connection switching control unit as to whether to enable wireless connection of the locking device with the terminal device. Therefore, when the connection switching instruction input unit becomes unusable while the locking device is switched to a state in which wireless connection with the terminal device is disabled, the user will not be able to use the terminal device as a device to input an unlock instruction to the locking device, and as a result, will not be able to unlock the boat propulsion machine using the terminal device.

### SUMMARY OF INVENTION

Aspect of non-limiting embodiments of the present disclosure relates to enable a boat propulsion machine to be unlocked using a terminal device even when a connection switching instruction input unit becomes unusable in the above-described boat propulsion machine control system.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a boat propulsion machine control system including:
an operating device including a plurality of operating elements for operating a boat propulsion machine;
a control device configured to control the boat propulsion machine, based on an operation of each of the operating elements;
a locking device configured to lock and unlock the boat propulsion machine; and
a terminal device configured to wirelessly communicate with the locking device,
in which the locking device includes:
   a lock control unit configured to control locking and unlocking of the boat propulsion machine;
   a wireless communication unit configured to control wireless communication between the locking device and the terminal device;
   a connection switching control unit configured to control switching whether to place the locking device into a state where the locking device is capable of being wirelessly connected to the terminal device; and
   a connection switching instruction input unit configured to input an instruction to the connection switching control unit as to whether to place the locking device into the state where the locking device is capable of being wirelessly connected to the terminal device,
the terminal device includes:
   an unlock instruction input unit configured to input an unlock instruction; and
   a transmitting unit configured to transmit, to the locking device, an instruction signal corresponding to the unlock instruction,
the lock control unit is configured to unlock the boat propulsion machine, based on the instruction signal transmitted from the transmitting unit, and
in a case where an instruction to place the locking device into the state where the locking device is capable of being wirelessly connected to the terminal device is input by the connection switching instruction input unit or in a case where a predetermined operating element among the plurality of operating elements is operated, the connection switching control unit is configured to place the locking device into the state where the locking device is capable of being wirelessly connected to the terminal device.

### BRIEF DESCRIPTION OF DRAWINGS

Exemplary embodiment(s) of the present invention will be described in detail based on the following figures, wherein:
FIG. 1 is an explanatory diagram illustrating a boat provided with a boat propulsion machine control system and a boat propulsion machine according to an example of the present disclosure;
FIG. 2 is a block diagram illustrating the boat propulsion machine control system and the boat propulsion machine according to the example of the present disclosure;
FIG. 3 is an explanatory diagram illustrating a cockpit of the boat as viewed from a direction of an arrow A in FIG. 1;
FIG. 4 is an explanatory diagram illustrating an unlock instruction input screen in a locking device of the boat propulsion machine control system according to the example of the present disclosure;
FIG. 5 is an explanatory diagram illustrating a wireless connection switching instruction input screen in the locking device of the boat propulsion machine control system according to the example of the present disclosure; and
FIG. 6 is a flowchart illustrating an overall flow of a control process for switching on/off a wireless communication function in the locking device of the boat propulsion machine control system according to the example of the present disclosure.

### DESCRIPTION OF EMBODIMENTS

A boat propulsion machine control system according to an embodiment of the present disclosure is a system for controlling a boat propulsion machine. The boat propulsion machine control system of this embodiment includes an operating device including a plurality of operating elements for operating the boat propulsion machine, a control device for controlling the boat propulsion machine based on an operation of each operating element, a locking device for locking and unlocking the boat propulsion machine, and a terminal device for wireless communication with the locking device. A user can operate the boat propulsion machine using the operating elements of the operating device. However, while the boat propulsion machine is locked by the locking device, operation of the boat propulsion machine is restricted. For example, when power of the boat propulsion machine control system is turned on, the boat propulsion machine is locked by the locking device. After unlocking the boat propulsion machine, the user operates the boat propulsion machine.

The locking device also includes a lock control unit that controls locking and unlocking of the boat propulsion machine, a wireless communication unit that controls wireless communication between the locking device and the terminal device, a connection switching control unit that controls switching whether to place the locking device in a state where the locking device can be wirelessly connected to the terminal device, and a connection switching instruction input unit that inputs an instruction to the connection switching control unit as to whether to place the locking device in a state where the locking device can be wirelessly connected to the terminal device.

The terminal device also includes an unlock instruction input unit for inputting an unlock instruction, and a transmitting unit for transmitting an instruction signal corresponding to the unlock instruction to the locking device.

When the terminal device approaches the locking device while the locking device is switched to a state in which the locking device can be wirelessly connected to the terminal device, the locking device and the terminal device are automatically wirelessly connected to each other. Such a wireless connection can be realized, for example, by using BLE as a wireless communication method between the locking device and the terminal device. On the other hand, while the locking device is switched to a state in which the locking device cannot be wirelessly connected to the terminal device, even when the terminal device approaches the locking device, no wireless connection is established between the locking device and the terminal device.

While the locking device and the terminal device are wirelessly connected, a user can input an unlock instruction to the terminal device using the unlock instruction input unit of the terminal device, and transmit an instruction signal corresponding to the unlock instruction to the locking device using the transmitting unit of the terminal device. The lock control unit of the locking device unlocks the boat propulsion machine based on the instruction signal transmitted from the transmitting unit of the terminal device. On the other hand, while the locking device and the terminal device are not wirelessly connected, the user cannot transmit the instruction signal corresponding to the unlock instruction to the locking device using the transmitting unit of the terminal device. In this way, while the locking device and the terminal device are wirelessly connected, the user can use the terminal device as a device for inputting an unlock instruction to the locking device, but while the locking device and the terminal device are not wirelessly connected, the user cannot use the terminal device as a device for inputting an unlock instruction to the locking device.

The user can input an instruction as to whether to place the locking device into a state in which the locking device can be wirelessly connected to the terminal device to the connection switching control unit of the locking device, using the connection switching instruction input unit of the locking device. This allows the user to switch whether to place the locking device into a state where the locking device can be wirelessly connected to the terminal device, and can freely choose whether to use the terminal device as a device for inputting an unlock instruction to the locking device.

In addition, the connection switching control unit of the locking device places the locking device into a state where the locking device can be wirelessly connected to the terminal device in both cases where an instruction to place the locking device into a state where the locking device can be wirelessly connected to the terminal device is input by the connection switching instruction input unit and where a predetermined operating element among the plurality of operating elements possessed by the operating device is operated. In other words, the user can switch the locking device to a state where the locking device can be wirelessly connected to the terminal device in two ways: by inputting an instruction to make the locking device capable of wireless connection with the terminal device using the connection switching instruction input unit, or by operating a predetermined operating element from among the plurality of operating elements possessed by the operating device. This means that even when the connection switching instruction input unit becomes unusable due to a malfunction or other reason, the user can switch the locking device to a state where the locking device can be wirelessly connected to the terminal device by operating a predetermined operating element among the plurality of operating elements possessed by the operating device. Therefore, even when the connection switching instruction input unit becomes unusable while the locking device is switched to a state in which wireless connection with the terminal device is disabled, the user can use the terminal device as a device to input an unlock instruction to the locking device, and can use the terminal device to unlock the boat propulsion machine.

### Example

Hereinafter, an example of the present disclosure will be described with reference to the drawings.

### Boat Propulsion Machine Control System

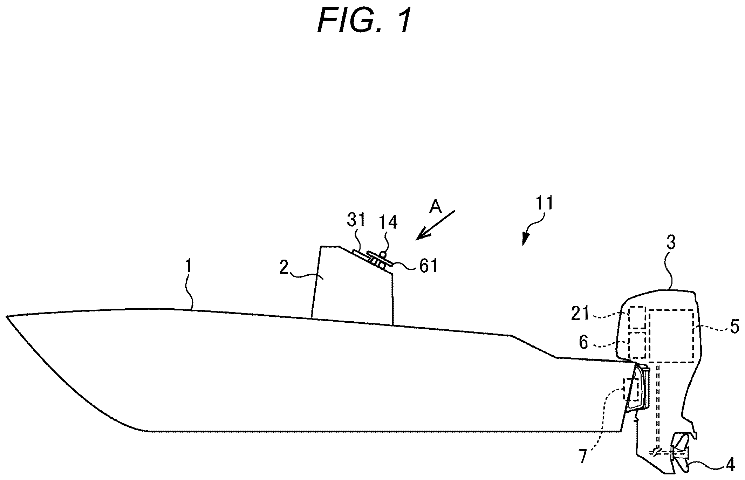

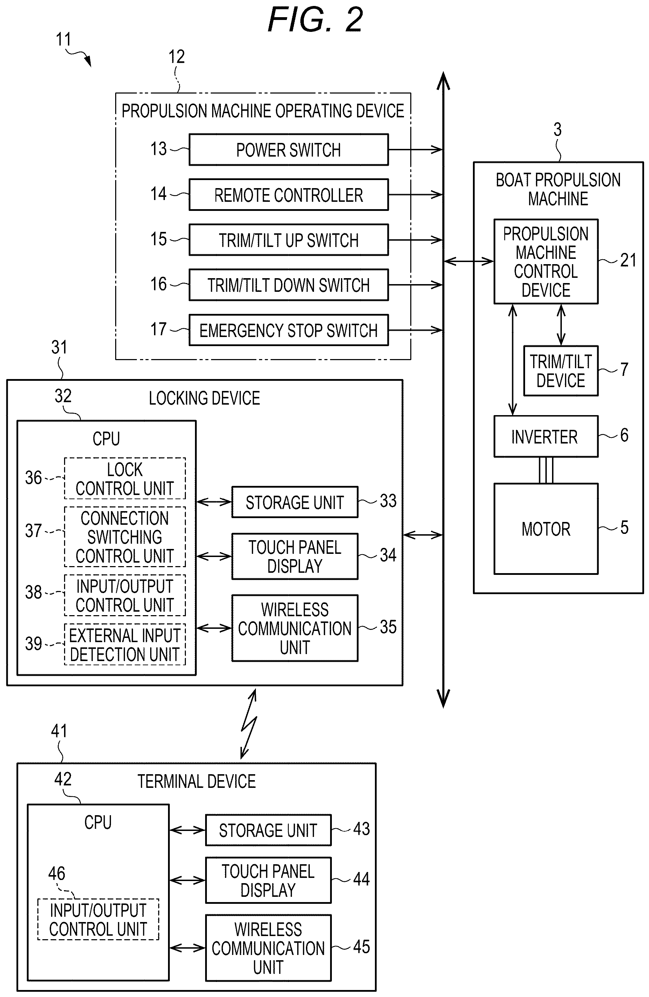

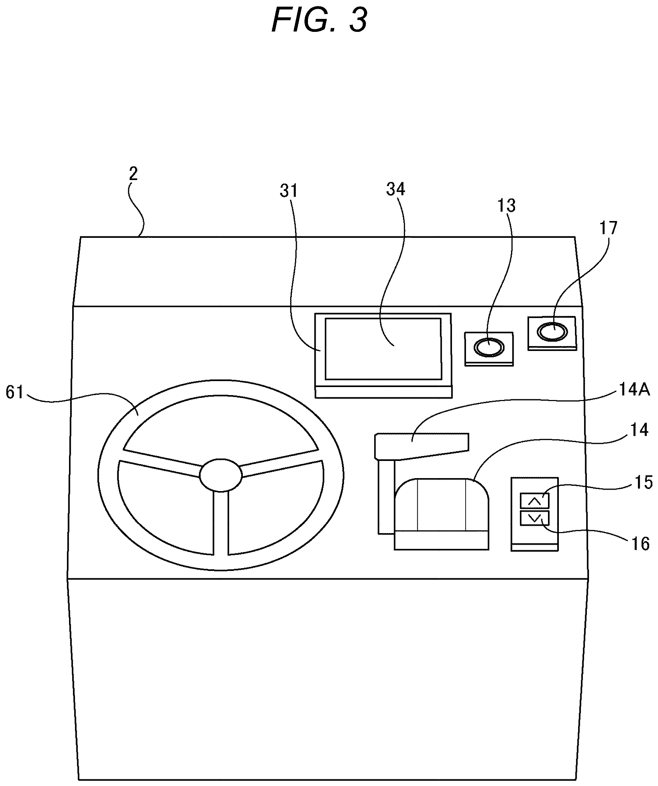

FIG. 1 illustrates a boat 1 including a boat propulsion machine control system 11 and a boat propulsion machine 3 according to the example of the present disclosure. FIG. 2 illustrates a configuration of the boat propulsion machine control system 11 and a configuration of the boat propulsion machine 3. FIG. 3 illustrates a cockpit 2 of the boat 1 as viewed from a direction of an arrow A in FIG. 1.

The boat propulsion machine control system 11 is a system configured to control the boat propulsion machine 3. As illustrated in FIG. 1, the boat propulsion machine 3 is, for example, an outboard machine, and is attached to a transom of the boat 1. The boat propulsion machine 3 includes a propeller 4 configured to generate a propulsive force of the boat 1, a motor (electric motor) 5 that is a power source configured to rotate the propeller 4, an inverter 6 configured to control drive of the motor 5, and a trim/tilt device 7 configured to change and adjust a trim angle or tilt angle of the boat propulsion machine 3. The motor 5 is a specific example of a "power source for a boat propulsion machine".

As illustrated in FIG. 2, the boat propulsion machine control system 11 includes a propulsion machine operating device 12, a propulsion machine control device 21, a locking device 31, and a terminal device 41. The propulsion machine operating device 12, the propulsion machine control device 21, and the locking device 31 are connected to one another via a wired communication network such as a Controller Area Network (CAN) formed within the boat 1. The locking device 31 and the terminal device 41 are wirelessly connected by BLE. The propulsion machine operating device 12 is a specific example of an "operating device", and the propulsion machine control device 21 is a specific example of a "control device".

The propulsion machine operating device 12 is a device configured to operate the boat propulsion machine 3. A user can operate the boat propulsion machine 3 by operating the propulsion machine operating device 12. The propulsion machine control device 21 is a device configured to control the boat propulsion machine 3, based on the operation of the propulsion machine operating device 12. The locking device 31 is a device configured to lock and unlock the boat propulsion machine 3. The terminal device 41 functions as a wireless unlocking device configured to wirelessly communicate with the locking device 31 to unlock the boat propulsion machine 3.

In a case where power of the boat propulsion machine control system 11 is turned on, the boat propulsion machine 3 is locked by the locking device 31. In a state where the boat propulsion machine 3 is locked, the user cannot operate the boat propulsion machine 3 using the propulsion machine operating device 12. The user can unlock the boat propulsion machine 3 in two ways. That is, first, the user can input an unlock instruction to a touch panel display 34 of the locking device 31 to unlock the boat propulsion machine 3. Hereinafter, unlocking using this method will be referred to as "direct unlocking". Second, the user can unlock the boat propulsion machine 3 by inputting an unlock instruction into the terminal device 41 and wirelessly transmitting an instruction signal corresponding to the unlock instruction from the terminal device 41 to the locking device 31. Hereinafter, unlocking using this method will be referred to as "wireless unlocking".

### Propulsion Machine Operating Device

The propulsion machine operating device 12 has a plurality of operating elements for operating the boat propulsion machine 3. As illustrated in FIG. 2, the propulsion machine operating device 12 in this example has, as operating elements, a power switch 13, a remote controller 14, a trim/tilt up switch 15, a trim/tilt down switch 16, and an emergency stop switch 17. As illustrated in FIG. 1, the boat 1 is provided with the cockpit 2. As illustrated in FIG. 3, the power switch 13, the remote controller 14, the trim/tilt up switch 15, the trim/tilt down switch 16, and the emergency stop switch 17 are provided in the cockpit 2.

The power switch 13 is a switch configured to switch the power supply to the boat propulsion machine control system 11 and the boat propulsion machine 3 on and off. In a case where a user presses the power switch 13 in a state where the power to the boat propulsion machine control system 11 and the boat propulsion machine 3 is off, the power to the boat propulsion machine control system 11 and the boat propulsion machine 3 is turned on and power is supplied to the boat propulsion machine control system 11 and the boat propulsion machine 3 from a battery installed on the boat 1. In a case where the user presses the power switch 13 in a state where the power to the boat propulsion machine control system 11 and the boat propulsion machine 3 is on, the power to the boat propulsion machine control system 11 and the boat propulsion machine 3 is turned off and the supply of power from the battery to the boat propulsion machine control system 11 and the boat propulsion machine 3 is stopped.

The remote controller 14 is a device for controlling rotation speed and rotation direction of the motor 5 of the boat propulsion machine 3. Rotation speed of the propeller 4 of the boat propulsion machine 3 increases or decreases depending on the rotation speed of the motor 5, and speed of the boat increases or decreases depending on the rotation speed of the propeller 4. Furthermore, the rotation direction of the motor 5 determines a rotation direction of the propeller 4 of the boat propulsion machine 3, and the rotation direction of the propeller 4 determines whether the boat moves forward or backward. The user can move the boat forward by tilting a lever 14A of the remote controller 14 forward, and can change forward speed of the boat by changing an angle at which the lever 14A of the remote controller 14 is tilted forward. In addition, the user can move the boat backward by tilting the lever 14A of the remote controller 14 backward, and can change reverse speed of the boat by changing an angle at which the lever 14A of the remote controller 14 is tilted backward. Furthermore, the user can stop the boat 1 by placing the lever 14A of the remote controller 14 in a neutral position.

The trim/tilt up switch 15 and the trim/tilt down switch 16 are switches for controlling the trim angle or tilt angle of the boat propulsion machine 3. By pressing the trim/tilt up switch 15, the user can increase the trim angle or tilt angle of the boat propulsion machine 3. In addition, the user can decrease the trim angle or tilt angle of the boat propulsion machine 3 by pressing the trim/tilt down switch 16.

The emergency stop switch 17 is a switch that forcibly stops the motor 5 of the boat propulsion machine 3. For example, when for some reason the motor 5 cannot be stopped using the remote controller 14 while the motor 5 is running, the user can stop the motor 5 by pressing the emergency stop switch 17.

In addition to the above operating elements, the cockpit 2 is also provided with a steering wheel 61 for steering the boat 1.

### Propulsion Machine Control Device

The propulsion machine control device 21 is configured to control an inverter 6, based on the operation of the remote controller 14, to control drive/stop of the motor 5, the rotation speed of the motor 5, the rotation direction of the motor 5, and the like. The propulsion machine control device 21 is configured to control the trim/tilt device 7, based on the operation of the trim/tilt up switch 15 and the trim/tilt down switch 16, to control the trim angle or tilt angle of the boat propulsion machine 3. Furthermore, the propulsion machine control device 21 is configured to control the inverter 6, based on the operation of the emergency stop switch 17, to forcibly stop the motor 5. The propulsion machine control device 21 is provided in the boat propulsion machine 3. The propulsion machine control device 21 also includes a Central Processing Unit (CPU) and a storage unit. The storage unit of the propulsion machine control device 21 is configured to store programs, data, and the like used to control the inverter 6 and the trim/tilt device 7.

### Locking Device

The locking device 31 is a device configured to lock and unlock the boat propulsion machine 3. The locking device 31 is provided in the cockpit 2 of the boat 1. The locking device 31 includes a CPU 32, a storage unit 33, a touch panel display 34, and a wireless communication unit 35. The storage unit 33 is configured to store programs, data, and the like used to control the locking and unlocking of the boat propulsion machine 3. The touch panel display 34 includes a display that displays a screen and a touch panel that detects touch input. The wireless communication unit 35 is configured to control wireless communication between the locking device 31 and the terminal device 41.

The CPU 32 is configured to execute the above programs stored in the storage unit 33 to function as a lock control unit 36, a connection switching control unit 37, an input/output control unit 38, and an external input detection unit 39. The lock control unit 36 is configured to control the locking and unlocking of the boat propulsion machine 3. The connection switching control unit 37 is configured to control switching whether to place the locking device 31 into a state where the locking device can be wirelessly connected to the terminal device 41. The input/output control unit 38 is configured to control display of a screen on the touch panel display 34, control output of an unlock instruction input to the touch panel display 34 to the lock control unit 36, and control output, to the connection switching control unit 37, of an instruction input to the touch panel display 34 as to whether to make the locking device 31 capable of wireless connection with the terminal device 41. In a case where a predetermined operating element of the propulsion machine operating device 12 is operated in a special manner that is different from normal, the external input detection unit 39 controls the output of an instruction to the connection switching control unit 37 to make the locking device 31 capable of wireless connection with the terminal device 41. The touch panel display 34 and the input/output control unit 38 are specific examples of a "connection switching instruction input unit".

### Terminal Device

The terminal device 41 is, for example, a small portable computer such as a smartphone, a mobile phone, a tablet, or a mobile notebook personal computer. The terminal device 41 is carried by, for example, a user (operator) of the boat 1. The terminal device 41 includes a CPU 42, a storage unit 43, a touch panel display 44, and a wireless communication unit 45. The storage unit 43 stores various application programs, data, and the like. The touch panel display 44 includes a display that displays a screen and a touch panel that detects touch input. The wireless communication unit 45 is configured to control wireless communication between the terminal device 41 and the locking device 31. The wireless communication unit 45 is a specific example of a "transmitting unit".

Among the various application programs stored in the storage unit 43 is an application program that causes the terminal device 41 to function as a wireless unlocking device that unlocks the boat propulsion machine 3 by wirelessly communicating with the locking device 31. Hereinafter, this will be referred to as the "unlock application program". The CPU 42 functions as an input/output control unit 46 by executing the unlock application program. The input/output control unit 46 is configured to control display of a screen on the touch panel display 44 and control output of an unlock instruction input to the touch panel display 44 to the wireless communication unit 45. In a case where an unlock instruction input to the touch panel display 44 is output from the input/output control unit 46 to the wireless communication unit 45, the wireless communication unit 45 wirelessly transmits an instruction signal corresponding to the unlock instruction to the locking device 31. The touch panel display 44 and the input/output control unit 46 are specific examples of an "unlock instruction input unit".

### Lock Control

Locking the boat propulsion machine 3 will be described in detail. The lock control unit 36 is configured to lock the boat propulsion machine 3. Locking the boat propulsion machine 3 means that the motor 5 of the boat propulsion machine 3 cannot be driven by operating the remote controller 14, and the trim/tilt device 7 of the boat propulsion machine 3 cannot be operated by operating the trim/tilt up switch 15 and the trim/tilt down switch 16. The lock control unit 36 is configured to control the propulsion machine control device 21 to lock the boat propulsion machine 3 by putting the propulsion machine control device 21 into a state in which it does not accept operation of the remote controller 14, the trim/tilt up switch 15, and the trim/tilt down switch 16.

Furthermore, the lock control unit 36 is configured to lock the boat propulsion machine 3, in a case where the power of the boat propulsion machine control system 11 is turned on. In a case where the power of the boat propulsion machine control system 11 is turned on, the motor 5 and the trim/tilt device 7 of the boat propulsion machine 3 are stopped. In this case, the boat propulsion machine 3 is locked, and the user cannot drive the motor 5 of the boat propulsion machine 3 or operate the trim/tilt device 7 unless he or she unlocks the boat propulsion machine 3 after turning on the power of the boat propulsion machine control system 11.

### Direct Unlocking

Direct unlocking means that the user unlocks the boat propulsion machine 3 by inputting an unlock instruction to the touch panel display 34 of the locking device 31. Direct unlocking will be described in detail.

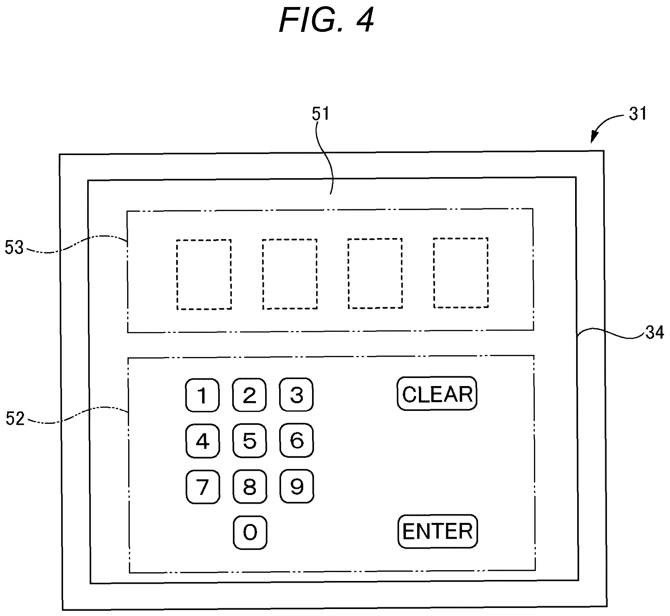

As described above, in a case where the power of the boat propulsion machine control system 11 is turned on, the boat propulsion machine 3 is locked. Immediately after the power of the boat propulsion machine control system 11 is turned on, the input/output control unit 38 of the locking device 31 displays an unlock instruction input screen 51 as illustrated in FIG. 4 on the touch panel display 34 of the locking device 31. The unlock instruction input screen 51 displays a passcode input section 52 for inputting a passcode for unlocking the device. The passcode input section 52 displays a numeric keypad, an enter key (ENTER), and a clear key (CLEAR). The unlock instruction input screen 51 also displays a passcode display section 53 where the input passcode is displayed. In order to hide the passcode, the input passcode may be displayed in the passcode display section 53 as, for example, "****".

The user taps the numeric keypad to enter a passcode. The user then taps the Enter key. This confirms the input passcode. When a user inputs an incorrect passcode, he or she can tap the clear key to re-enter the passcode. When the input passcode is confirmed, the input/output control unit 38 outputs the input passcode to the lock control unit 36 as an unlock instruction. The lock control unit 36 is configured to compare the passcode output from the input/output control unit 38 with a passcode stored in advance in the storage unit 33 of the locking device 31. When the two passcodes match, the lock control unit 36 unlocks the boat propulsion machine 3. Specifically, the lock control unit 36 controls the propulsion machine control device 21 to place the propulsion machine control device 21 into a state in which it can accept operations of the remote controller 14, the trim/tilt up switch 15, and the trim/tilt down switch 16. This allows the user to drive the motor 5 of the boat propulsion machine 3 by operating the remote controller 14, and also allows the user to operate the trim/tilt device 7 of the boat propulsion machine 3 by operating the trim/tilt up switch 15 and the trim/tilt down switch 16.

### Wireless Unlocking

Wireless unlocking means that the user unlocks the boat propulsion machine 3 by inputting an unlock instruction into the terminal device 41 and wirelessly transmitting an instruction signal corresponding to the unlock instruction from the terminal device 41 to the locking device 31. Here, wireless unlocking will be described in detail.

After turning on the power of the boat propulsion machine control system 11, the user operates the terminal device 41 to start up the unlock application program on the terminal device 41. When the unlock application program is started, the input/output control unit 46 of the terminal device 41 displays an unlock instruction input screen similar to the unlock instruction input screen 51 illustrated in FIG. 4 on the touch panel display 44 of the terminal device 41.

The user taps the numeric keypads on the unlock instruction input screen displayed on the touch panel display 44 of the terminal device 41 to input a passcode, and then taps the enter key. In response to this, the input/output control unit 46 is configured to output the input passcode to the wireless communication unit 45 as an unlock instruction. Next, the wireless communication unit 45 is configured to wirelessly transmit an instruction signal including the passcode output from the input/output control unit 46 to the locking device 31. The lock control unit 36 is configured to compare the passcode included in the instruction signal transmitted from the wireless communication unit 45 of the terminal device 41 with the passcode stored in advance in the storage unit 33 of the locking device 31. When the two passcodes match, the lock control unit 36 unlocks the boat propulsion machine 3.

### Switching Wireless Communication Function of Locking Device On/Off

The locking device 31 has a function of switching whether to place the locking device 31 into a state where the locking device can be wirelessly connected to the terminal device 41. This function is realized by the connection switching control unit 37 of the locking device 31. That is, the connection switching control unit 37 of the locking device 31 is configured to control whether to place the locking device 31 into a state where the locking device can be wirelessly connected to the terminal device 41.

BLE is adopted as the wireless communication method between the locking device 31 and the terminal device 41. Generally, a procedure for wirelessly connecting two devices to each other using BLE is as follows. First, in preparation for wireless connection, two devices are paired (bonded). After pairing is complete, power of the two devices are turned on and, with the BLE wireless communication function of the two devices turned on, the two devices are brought close to each other. This automatically connects the two devices wirelessly to each other. When the BLE wireless communication function of either or both of the two devices is turned off, the two paired devices will not be wirelessly connected even when the two devices are turned on and brought close to each other.

The connection switching control unit 37 of the locking device 31 is configured to control switching whether to place the locking device 31 into a state in which the locking device can be wirelessly connected to the terminal device 41. Specifically, this control is control to switch the BLE wireless communication function of the locking device 31 on and off.

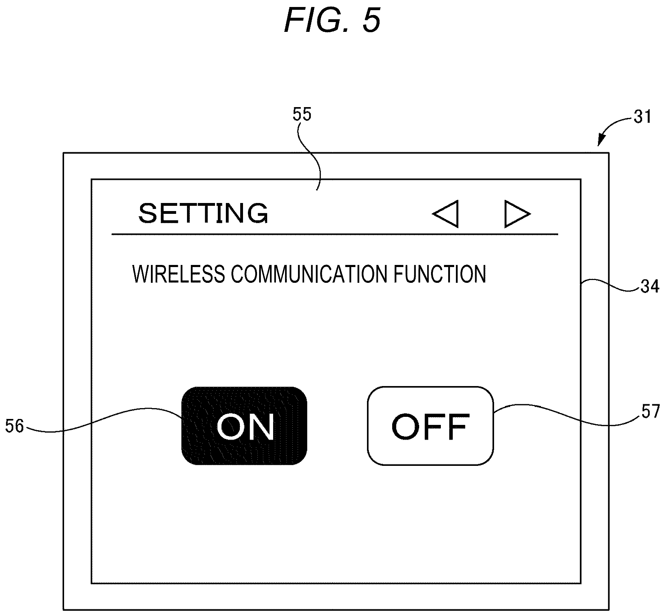

The user can freely switch the BLE wireless communication function of the locking device 31 on and off by operating the touch panel display 34 of the locking device 31. More specifically, the locking device 31 has a function of making a plurality of settings (SETTING) related to the locking device 31 based on the operation of the touch panel display 34 by the user. The plurality of settings for the locking device 31 include switching on and off the BLE wireless communication function. The user can operate the touch panel display 34 of the locking device 31 and select, from the plurality of settings related to the locking device 31, switching whether to turn on or off the BLE wireless communication function. When the user selects to switch the BLE wireless communication function on or off, the input/output control unit 38 of the locking device 31 displays a wireless communication function on/off switching screen 55 as illustrated in FIG. 5 on the touch panel display 34 of the locking device 31. The wireless communication function on/off switching screen 55 displays a wireless communication function on switch 56 and a wireless communication function off switch 57. When the user taps the wireless communication function on switch 56, the input/output control unit 38 outputs an instruction (an instruction to make the locking device 31 capable of wireless connection with the terminal device 41) to turn on the BLE wireless communication function of the locking device 31 to the connection switching control unit 37. In response to this, the connection switching control unit 37 turns on the BLE wireless communication function of the locking device 31, making the locking device 31 capable of wireless connection with the terminal device 41. On the other hand, when the user taps the wireless communication function off switch 57, the input/output control unit 38 outputs an instruction (an instruction to make the locking device 31 unable to wirelessly connect to the terminal device 41) to turn off the BLE wireless communication function of the locking device 31 to the connection switching control unit 37. In response to this, the connection switching control unit 37 turns off the BLE wireless communication function of the locking device 31, and places the locking device 31 in a state where the locking device cannot be wirelessly connected to the terminal device 41.

### Another Way to enable Wireless Communication Function of Locking Device

The locking device 31 has a function of turning on (making the locking device 31 capable of wireless connection with the terminal device 41) the BLE wireless communication function of the locking device 31 when a predetermined operating element of the propulsion machine operating device 12 is operated in a special manner that is different from normal. More specifically, the external input detection unit 39 of the locking device 31 is configured to detect that a predetermined operating element of the propulsion machine operating device 12 has been operated in a special manner that is different from normal. In a case where the external input detection unit 39 detects that a predetermined operating element of the propulsion machine operating device 12 has been operated in a special manner that is different from normal, the external input detection unit outputs an instruction (an instruction to make the locking device 31 capable of wireless connection with the terminal device 41) to the connection switching control unit 37 to turn on the BLE wireless communication function of the locking device 31.

In this example, the operation of a predetermined operating element of the propulsion machine operating device 12 in a special manner that is different from normal is the long press of the emergency stop switch 17. While the power of the boat propulsion machine control system 11 is on, the external input detection unit 39 is configured to monitor the operation state of the emergency stop switch 17. In a case where the user presses and holds the emergency stop switch 17, the external input detection unit 39 detects this. In a case where the external input detection unit 39 detects that the emergency stop switch 17 has been pressed and held down, the external input detection unit outputs an instruction to the connection switching control unit 37 to turn on the BLE wireless communication function of the locking device 31. In response to this, the connection switching control unit 37 turns on the BLE wireless communication function of the locking device 31, making the locking device 31 capable of wireless connection with the terminal device 41.

### Flow of Control Process for Switching On/Off Wireless Communication Function of Locking Device

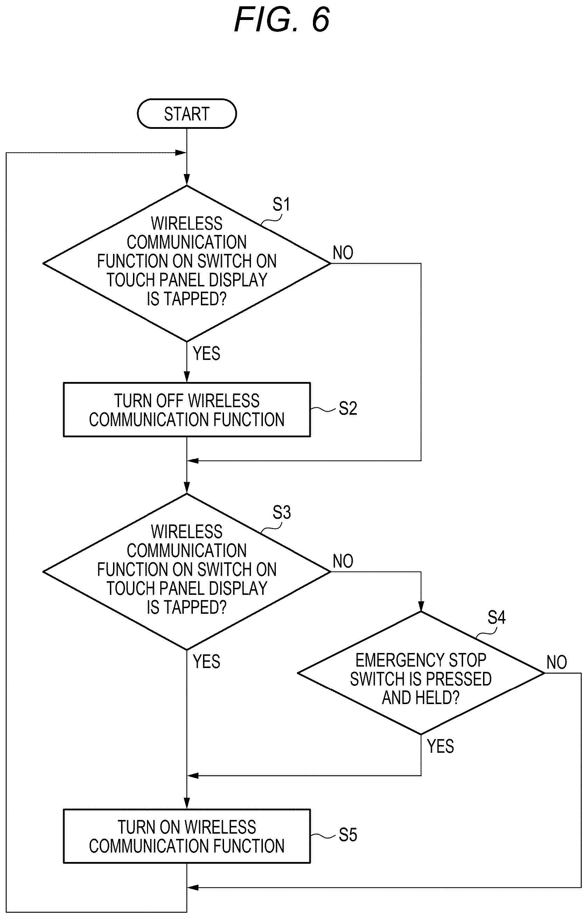

FIG. 6 illustrates an overall flow of a control process for switching on/off the BLE wireless communication function of the locking device 31 described above.

In FIG. 6, first, the input/output control unit 38 of the locking device 31 determines whether the wireless communication function off switch 57 in the wireless communication function on/off switching screen 55 displayed on the touch panel display 34 has been tapped (step S1).

In a case where the wireless communication function off switch 57 is tapped (step S1: YES), the input/output control unit 38 outputs an instruction to the connection switching control unit 37 to turn off the BLE wireless communication function of the locking device 31, and in response, the connection switching control unit 37 turns off the BLE wireless communication function of the locking device 31 (step S2). In step S2, when the BLE wireless communication function of the locking device 31 is already turned off, that state is maintained.

On the other hand, in step S1, when the wireless communication function off switch 57 is not tapped (step S1: NO), the process proceeds from step S1 to step S3.

Next, the input/output control unit 38 of the locking device 31 determines whether the wireless communication function on switch 56 in the wireless communication function on/off switching screen 55 displayed on the touch panel display 34 has been tapped (step S3).

When the wireless communication function on switch 56 is not tapped (step S3: NO), the external input detection unit 39 of the locking device 31 determines whether the emergency stop switch 17 has been pressed and held (step S4).

When the wireless communication function on switch 56 is tapped in step S3 (step S3: YES), or when the emergency stop switch 17 is pressed and held in step S4 (step S4: YES), the input/output control unit 38 outputs an instruction to turn on the BLE wireless communication function of the locking device 31 to the connection switching control unit 37, and in response, the connection switching control unit 37 turns on the BLE wireless communication function of the locking device 31 (step S5). In step S5, when the BLE wireless communication function of the locking device 31 is already on, that state is maintained.

As described above, the boat propulsion machine control system 11 of the example of the present disclosure places the locking device 31 into a state in which the locking device can be wirelessly connected to the terminal device 41 when an instruction to place the locking device 31 into a state in which the locking device can be wirelessly connected to the terminal device 41 is input by operating the touch panel display 34 of the locking device 31. Specifically, when the wireless communication function on switch 56 on the touch panel display 34 of the locking device 31 is tapped, the BLE wireless communication function of the locking device 31 is turned on. In addition, the boat propulsion machine control system 11 of the example of the present disclosure places the locking device 31 into a state in which the locking device can be wirelessly connected to the terminal device 41 when a predetermined operating element of the propulsion machine operating device 12 is operated in a special manner that is different from normal. Specifically, when the emergency stop switch 17 is pressed and held down, the BLE wireless communication function of the locking device 31 is turned on. Therefore, even when the touch panel display 34 of the locking device 31 becomes unusable, for example, due to a malfunction, while the locking device 31 is switched to a state in which the locking device cannot be wirelessly connected to the terminal device 41, the user can switch the locking device 31 to a state in which the locking device can be wirelessly connected to the terminal device 41 by operating a predetermined operating element of the propulsion machine operating device 12 in a special manner. Specifically, even when the touch panel display 34 of the locking device 31 becomes unusable, for example, due to a malfunction, while the BLE wireless communication function of the locking device 31 is turned off, the user can turn on the BLE wireless communication function of the locking device 31 by pressing and holding the emergency stop switch 17. Therefore, even when the touch panel display 34 of the locking device 31 becomes unusable while the locking device 31 is switched to a state in which wireless connection with the terminal device 41 is disabled, specifically while the BLE wireless communication function of the locking device 31 is turned off, the user can reliably unlock the boat propulsion machine 3 using the terminal device 41.

In other words, if the only way to turn on the BLE wireless communication function of the locking device 31 is to operate the touch panel display 34 of the locking device 31, when the touch panel display 34 of the locking device 31 becomes unusable while the BLE wireless communication function of the locking device 31 is turned off, the user will no longer be able to wirelessly connect the locking device 31 to the terminal device 41. Therefore, the user cannot perform either direct unlocking or wireless unlocking, and as a result, the user cannot unlock the boat propulsion machine 3. In contrast, in the boat propulsion machine control system 11 of this example, in addition to operating the touch panel display 34 of the locking device 31, there is also a method of pressing and holding the emergency stop switch 17 as a method of turning on the BLE wireless communication function of the locking device 31. Therefore, even when the touch panel display 34 of the locking device 31 becomes unusable while the BLE wireless communication function of the locking device 31 is turned off, the user can turn on the BLE wireless communication function of the locking device 31 by pressing and holding the emergency stop switch 17. This allows the user to wirelessly connect the locking device 31 to the terminal device 41 and unlock the boat propulsion machine 3 using the terminal device 41.

Effects of the boat propulsion machine control system of this example will be further described with an example. For example, suppose that a user normally unlocks the boat propulsion machine 3 by operating the touch panel display 34 of the locking device 31, and does not unlock the boat propulsion machine 3 using the terminal device 41, and therefore always turns off the BLE wireless communication function of the locking device 31. One day, the user turns on the power of the boat propulsion machine control system 11 as usual, then operates the touch panel display 34 of the locking device 31 to unlock the boat propulsion machine 3 and begins sailing. Then, while sailing at sea, the boat drops anchor, turns off the power of the boat propulsion machine control system 11, anchors, and goes to enjoy fishing, when for some reason the touch panel display 34 of the locking device 31 malfunctions and becomes unusable. In this case, the user can turn on the power of the boat propulsion machine control system 11 to drive the motor 5 of the boat propulsion machine 3 and return to the shore, but cannot operate the touch panel display 34 of the locking device 31 to unlock the boat propulsion machine 3. In addition, the BLE wireless communication function of the locking device 31 is turned off as usual. Since the touch panel display 34 of the locking device 31 is unusable, the user cannot operate the touch panel display 34 of the locking device 31 to turn on the BLE wireless communication function of the locking device 31. However, after turning on the power of the boat propulsion machine control system 11, the user can press and hold the emergency stop switch 17 to turn on the BLE wireless communication function of the locking device 31. The user can then wirelessly connect the locking device 31 to the terminal device 41 and use the terminal device 41 to unlock the boat propulsion machine 3. Therefore, the user can operate the remote controller 14 to drive the motor 5 of the boat propulsion machine 3 and return to the shore safely.

In the above example, an example is given of a case where the BLE wireless communication function of the locking device 31 is turned on when a predetermined operating element of the propulsion machine operating device 12 is operated in a special manner that is different from normal, and as a further specific example, an example is given of a case where the BLE wireless communication function of the locking device 31 is turned on when the emergency stop switch 17 is pressed and held down. However, the present invention is not limited to this. That is, the special operation of the operating element for turning on the BLE wireless communication function of the locking device 31 is not limited to pressing and holding the emergency stop switch 17. The special operation of the operating element for turning on the BLE wireless communication function of the locking device 31 may be, for example, pressing the emergency stop switch 17 several times in succession at short intervals, pressing and holding the power switch 13, pressing the power switch 13 several times in succession at short intervals, pressing the power switch 13 and the emergency stop switch 17 simultaneously, or pressing and holding the trim/tilt up switch 15 and the trim/tilt down switch 16 simultaneously.

In addition, the BLE wireless communication function of the locking device 31 may be turned on when the operating element of the propulsion machine operating device 12 is operated in a normal manner at a timing when the operating element is not normally operated. For example, when the emergency stop switch 17 is pressed in the normal manner while the motor 5 is stopped (when the emergency stop switch 17 is pressed once for a short time while the motor 5 is stopped), the BLE wireless communication function of the locking device 31 may be turned on.

Furthermore, when an operation to switch the control of the boat propulsion machine 3 to special control for emergency use is performed using an operating element, the BLE wireless communication function of the locking device 31 may be turned on. Special control for emergency use of the boat propulsion machine 3 is, for example, control that limits the output of the motor 5 of the boat propulsion machine 3 to a level lower than normal when the boat propulsion machine 3 is damaged.

In addition, in the above example, examples of methods for unlocking the boat propulsion machine 3 include direct unlocking, in which the user unlocks the boat propulsion machine 3 by inputting an unlock instruction to the touch panel display 34 of the locking device 31, and wireless unlocking, in which the user unlocks the boat propulsion machine 3 by inputting an unlock instruction to the terminal device 41 and having the terminal device 41 wirelessly transmit an instruction signal corresponding to the unlock instruction to the locking device 31. However, the present invention is not limited to this. The method for unlocking the boat propulsion machine 3 may be wireless unlocking only.

Furthermore, the input of the unlock instruction for the boat propulsion machine 3 is not limited to the input of a passcode. For example, a method of drawing a predetermined pattern on a touch panel display with a finger, a method of reading a fingerprint, or a method of facial recognition by capturing a facial image may be used.

Furthermore, the operating elements of the operating device of the present disclosure are not limited to the operating elements given in the example. Furthermore, the wireless communication method between the locking device 31 and the terminal device 41 is not limited to BLE. Furthermore, the locking device 31 may be integrated with the propulsion machine operating device 12 or any of the operating elements of the propulsion machine operating device 12. The lock control unit 36 may also be configured to control locking and unlocking of the remote controller 14. Furthermore, the power source of the boat propulsion machine is not limited to a motor, but may be an engine (internal combustion engine). When an engine is used as the power source for the boat propulsion machine, an engine start switch is added as an operating element of the operating device. Furthermore, the boat propulsion machine is not limited to an outboard machine, but may be another type of boat propulsion machine, such as an outboard inboard machine.

Furthermore, the present invention can be modified as appropriate within the scope of the claims and the gist or concept of the invention that can be read from the entire specification, and a boat propulsion machine control system that involves such modifications is also included in the technical concept of the present invention.

## Claims

1. A boat propulsion machine control system comprising:
an operating device including a plurality of operating elements for operating a boat propulsion machine;
a control device configured to control the boat propulsion machine, based on an operation of each of the operating elements;
a locking device configured to lock and unlock the boat propulsion machine; and
a terminal device configured to wirelessly communicate with the locking device,
wherein the locking device includes:
a lock control unit configured to control locking and unlocking of the boat propulsion machine;
a wireless communication unit configured to control wireless communication between the locking device and the terminal device;
a connection switching control unit configured to control switching whether to place the locking device into a state where the locking device is capable of being wirelessly connected to the terminal device; and
a connection switching instruction input unit configured to input an instruction to the connection switching control unit as to whether to place the locking device into the state where the locking device is capable of being wirelessly connected to the terminal device,
the terminal device includes:
an unlock instruction input unit configured to input an unlock instruction; and
a transmitting unit configured to transmit, to the locking device, an instruction signal corresponding to the unlock instruction,
the lock control unit is configured to unlock the boat propulsion machine, based on the instruction signal transmitted from the transmitting unit, and
in a case where an instruction to place the locking device into the state where the locking device is capable of being wirelessly connected to the terminal device is input by the connection switching instruction input unit or in a case where a predetermined operating element among the plurality of operating elements is operated, the connection switching control unit is configured to place the locking device into the state where the locking device is capable of being wirelessly connected to the terminal device.

2. The boat propulsion machine control system according to claim 1,
wherein the operating device includes, as the operating element, an emergency stop switch for causing an emergency stop of a power source of the boat propulsion machine, and
in the case where the instruction to place the locking device into the state where the locking device is capable of being wirelessly connected to the terminal device is input by the connection switching instruction input unit or in a case where the emergency stop switch is operated, the connection switching control unit is configured to place the locking device into a state capable of being wirelessly connected to the terminal device.

3. The boat propulsion machine control system according to claim 1,
wherein in the case where the instruction to place the locking device into the state where the locking device is capable of being wirelessly connected to the terminal device is input by the connection switching instruction input unit or in a case where a predetermined operating element among the plurality of operating elements is operated in a special manner that is different from normal, the connection switching control unit is configured to place the locking device into the state where the locking device is capable of being wirelessly connected to the terminal device.

4. The boat propulsion machine control system according to claim 1,
wherein in the case where the instruction to place the locking device into a state where the locking device is capable of being wirelessly connected to the terminal device is input by the connection switching instruction input unit or in a case where an operation to switch control of the boat propulsion machine to special control for emergency use is performed by the operating element, the connection switching control unit is configured to place the locking device into the state where the locking device is capable of being wirelessly connected to the terminal device.

5. The boat propulsion machine control system according to claim 4,
wherein the special control for emergency use includes control for limiting output of a power source of the boat propulsion machine to a level lower than normal.
